# EUROPEAN PATENT APPLICATION

(11) **EP 3 355 252 A1**
(43) Date of publication of application: **01.08.2018**
(21) Application number: 15904680.4
(22) Date of filing: 22.09.2015
(51) Int. Cl.: G06Q 10/08, G06Q 50/30, G08C 17/02

(54) **DEVICE AND METHOD FOR CAPTURING DATA FOR THE CONTROL AND TRACKING OF PRODUCTS**

(71) Applicant: Sociedad Española Para el Internet de Las Cosas, S.L., 08800 Villanova l la Geltrú (Barcelona) (ES)
(72) Inventor: MIRALLES FERRER, Griselda, 08810 Sant Pere de Ribes (Barcelona) (ES); LONGOBUCO GONZALEZ, Martin, 08810 Sant Pere de Ribes (Barcelona) (ES)
(74) Representative: Espiell Volart, Eduardo Maria
(86) International application number: PCT/ES2015/070684
(87) International publication number: WO 2017/051040

(57) **Abstract**

DEVICE AND METHOD FOR CAPTURING DATA FOR THE CONTROL AND TRACKING OF PRODUCTS, comprising , supported on or attached to the product it is sought to control, a series of sensors (5) that capture different variables of the product and a process unit (1), incorporating a stand-alone power supply (3), a storage memory (2) and a emitter/receiver (4) of wireless communications, in which the said process unit (1) incorporates a program that analyzes, stores and transmits through a wireless network, such as Internet, the value of the variables captured at a given moment by the different sensors (5) and the activation and de-activation depending on the conditions and on the function of values and data captured from some of the mechanisms of this device.

## Description

### OBJECT OF THE INVENTION

The invention as stated in the title of this specification refers to a device designed to capturing a series of data allowing the control and tracking of a product during its transport or handling. More concretely, it is about controlling the situation and a series of variables affecting the concrete product involved, such as, for example, its temperature, at any moment. The invention is also about the method to carry out such control and tracking and its implementation in a place totally different from the place where the product is located, accessible by a conventional means through a wireless network, such as Internet.

Namely, the object of the invention is focussed in an electronic device that captures and logs a series of variables affecting the product to be followed up which values it logs in and transmits through a wireless network, such as Internet, with a tracking centre. Concretely, this device has been designed for the control and tracking during the shipment and transport of given products that require, not to be impaired, to keep given parameterizable values, for example the temperature, within a very specific range of limits, such as for example medicaments, vaccines, foods, dry ice, organs for transplants, animals, biological samples, etc. This device shows the feature of being structurally configured to allow such control and tracking, in addition to storing data in memory, by means of the tracking in real time online from any device having access to a wireless network such as Internet and using any telecommunication operator, allowing a tracking as accurate as it is wished to be defined and without depending on any specific application of any concrete server or data manager, all of it in addition with a significant cutdown of the economic cost of the said service .

The field of application of this invention is within the sector of the industry engaged in the manufacture of electronic devices to log in parametrizable data, focusing in the scope of those incorporating geolocation and remote tracking. More concretely, the invention is within the field of the technology named Internet of things (loT) that refers to the digital interconnection of everyday objects with Internet, so that they can be identified and managed though that means.

### BACKGROUND OF THE INVENTION

As it is known, a datalogger is an electronic device that logs data in the time or with relation to the location by means of instruments and sensors of its own or externally connected. Almost all these devices are based in microcontrollers and generally they are small portable devices battery-powered and they are equipped with a microprocessor having an internal memory to store data and they have a series of sensors available that capture the variables to be measured and/or control the product. Some data loggers are communicated with a personal computer and use specific software to activate the datalogger, see and analyze the data collected, while others have a local interface device (keyboard, LCD screen) and may be used as a stand-alone device.

In addition, normally they are provided with a real time clock to add the date and time of the data collected and they can be designed to have a single channel, for example, only temperature, until constituting complex programmable systems with multiple entries and logging of calculated values and alarms based on the average values. For example, hours of cold per day, dew point based on temperature and humidity, differences of temperature between two sensors, etc.

The most modern dataloggers operate as servers of dynamic web pages that may be remotely consulted.

However, in most of the cases, the said device is used as static elements to measure and collect data at a fixed location.

The problem arises when the need to log the data is to be carried out in one or more moving elements, such as the case of the control of products that are send by transport from one place to another and the surveillance in the maintenance of the suitable conditions for the said transport is necessary.

In the document WO2005069203 a system of collection and assessment of data is disclosed including an active RFID label for the collection, stamping the time and the storage of the data of the sensors of a vehicle. The system includes in addition a device of external data acquisition, such as a portable device provided with a LCD screen, that communicates with the device placed within the vehicle and with other portable devices, computers or mobile phones. This system of automatic collection and transfer of data allows the automation of the process of management of fleets, maintenance of vehicles and processes of repair and given characteristics of safety.

For example in the case of products such as medicaments, vaccines, foods, organs for transplant, animals, biological samples, chemical products, etc. that are often sent from one place to another, even thousands of kilometers away, it can become very important that the temperature , relative humidity or the oxygen are kept within a given range of values and do not exceed certain limits when they are transferred in the different means of transport and that can sometimes match from the pickup of the local deliveryman, to merchant ships, planes, trucks or trains and be withheld in invoicing stores, customs or logistics under very variable and not always foreseeable conditions of temperature and environment. But in all these cases, it would be desirable to be able to count on a datalogger allowing to keep a control as accurate as necessary depending on the type of product to be transported, no matter the distance, means of transport and that is fully independent from the means of transport, but only associated to the product itself.

It is also desirable that the number of shipments to be controlled can be unlimited because although some devices of this type are known capable to allow to tracking of geolocation, for data controlling and logging, those known up to now use a specially hired server that, though a specific application allows to give access to the data logged which, however, only allows their display offline during the logging period and, on the other hand, it has a very high economic cost. This limitation , in addition, has the drawback of being subject to the capacity of the said server and, if for example the volume of products to be controlled is very high, as can be the case of companies that simultaneously send thousands of parcels of dry ice to multiple destinations and require to be able to control every and each of them at any moment, such limitation would mean a significant hindrance for its development.

The objective of this invention is, therefore, to develop an improved datalogger for control and tracking of products that meets the said expectations, and it shall be pointed out that, at least the applicant, is not aware of the existence of any other datalogger or invention having a similar application that show technical, structural and constructive characteristics similar to those shown by the herein preconized, as claimed.

### DESCRIPTION OF THE INVENTION

The datalogger for control and tracking products that require to keep specific values and the proceeding to carry out the said control and tracking that the invention proposes comprises a process unit (microprocessor) having an internal memory to store the data and a stand-alone power supply (non-rechargeable or rechargeable battery) and wireless communication means allowing to establish a communication through a wireless network, such as Internet. This process unit is associated to a series of sensors that capture different variables of the product it is wished to control. These sensors can be of any type: the most usual is a temperature, humidity, pressure, collision, etc. probe.

Optionally, this device can control different peripherals, such as a LCD reading screen, a clock or a series of drivers for programming or controlling the control unit, data dump from the storage memory, GPS, etc.

The invention mainly lies in a program implemented in the said process unit that analyzes, stores and transmits through a wireless network, such as Internet, the value of the variables captured at a given moment by the different sensors incorporated to the device.

This program also manages the internal operation of the device, controlling the management of the communications and the correct operation of the sensors, while the operation of these devices associated to the product in function of given variables or conditions of operativity is calibrated or adjusted. For example, at a given height, it turns off the connections (assuming it is in a plane in flight); without coverage, it turns off the shipment of data and it stores them for their further shipment; if it detects an error in a sensor, it disconnects it, etc. It also detects initial conditions and perform a self-calibration therefore if a variation changes the operation of the device, it adjusts the said operation on the basis of the new value of the said variable.

The process of data capture for the control and tracking of products, comprises the following steps:
- initial calibration of the sensors placed around the product;
- the periodical capture of data or variables from the said sensors:
- the storage and/or shipment of the captured data and,
- the activation and deactivation depending on the conditions and function of the values and data captured from some of the mechanisms of the said device.

The computer program implemented in the memory of the process unit comprises parts of software code capable to carry out the steps of the process or the operations of the device of data capture for the control and tracking of products previously detailed when it is executed in the process unit of the said device.

The access to the data of the device is carried out through a webpage accessible from any device having access to a wireless network, such as Internet, so that the control and tracking of any product to which a device has been assigned is carried out in real time.

The connection through a wireless network, such as Internet, that allows that the device can also facilitate the access thereof and thus modify either its operation conditions or the parameters that marks the calibration of the device. To that effect, this device can have a feedback (control mechanism of the dynamic systems by which a given proportion of the output signal is re-directed to the entry, allowing to regulate its performance) which allows to remotely reprogramming the device, even when it is being used in a shipment.

The preconized device contemplates the development of the hardware, programming the firmware and the management software of the device. The data provided through a wireless network, such as Internet, can be in multiple formats, for example, in xml, txt or kml format; the last being the preferred format because with it is possible to directly read in the Google Earth platform the reproduction on the map of the path the product incorporating the device of the invention followed, allowing to know the temperature or parameter that control each sensor of the device at each moment of the travel.

### DESCRIPTION OF THE FIGURES

To complement the description that is been made and in order to facilitate the understanding of the characteristics of the invention, a set of drawings accompanies this specification in which, for illustration and non-limiting purpose, the following has been represented:

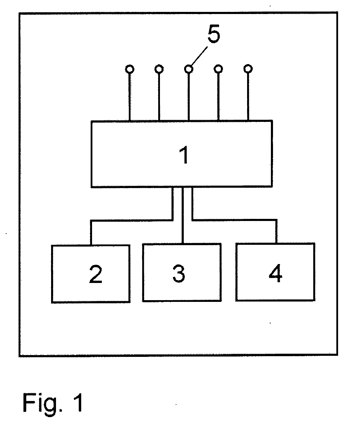

Figure 1 shows a functional block diagram of the electronic device of the invention, where the main elements composing it can be seen.

### PREFERRED EMBODIMENT OF THE INVENTION

As it can be seen in the referred figure, the device involved is an electronic device incorporating, conveniently connected, at least a process unit (1), a memory card (2), a power supply (3) and an emitter/receiver (4) of wireless communication having capacity of connection through a wireless network, such as Internet. The said process unit (1) receives the electric signal coming from different sensors (5) placed on or around the product it is sought to control.

In addition, the device contemplates the implementation of software that analyzes, stores and transmits through a wireless network, such as Internet, the value of the variables captured at a given moment by the different sensors incorporated in the device. This program also manages the internal operation of the device, controlling the management of the communications and the correct operation of the sensors, that allows at same time its self-calibration and the adjustment of the operation of the sensors associated to the product and/or of the emitter/receiver, depending on given variables or conditions of operativity.

The power supply in a preferred embodiment is a lithium battery, with built-in USB charger.

Although in the basic embodiment represented in Figure 1 only the essential components or mechanism of this device are shown, optionally this device can control different peripherals, such as the LCD reading screen, a clock or a series of drivers for programming or controlling the control unit, data dump from the storage memory, GPS, etc. The software implemented in the device also controls these auxiliary mechanisms.

Whereas the preconized device is specially designed for the control and tracking during the shipment and transport of products that need, normally not to be impaired, to keep certain values, namely the temperature, humidity or others, within a very specific range of limits, the electronic device is arranged, preferably incorporated within the container in which the said shipment and transport of the product involved is to be carried out.

The process of data capture for control and tracking of the products starts with the initial calibration of the sensors. After it is operating with a periodicity set by software, the data and variables of the sensors are captured and they are stored in the memory (memo) of the device, at the same time that there are sent through a wireless network, such as Internet, inserted in an electronic file having any format established.

According to an important characteristic of the invention this process also comprises a step that involves the activation and de-activation of some of the mechanisms of this device depending on the conditions and function of the captured values and data. For example, when a pressure sensor or the GPS detects that the device is in a plane in flight, it will turn off the data emitter/receiver because it is not likely that under such circumstances any coverage exits.

Preferably, the process of data capture for control and tracking of products generates an alarm when the sensors (5) detect that the setpoint is exceeded.

The computer program implemented in the memory of the process unit, that has not been represented for obvious reasons, includes parts of software code capable to carry out steps of the process or the operations of the data capture device for the control and tracking of products, when it is carried out in the process unit of the said device.

The nature of the invention having been sufficiently described, as well as the example of preferred embodiment, it is stated for due effects that the materials, shape, size and arrangement of the described elements can be changed provided that does not mean an alteration of the essential characteristics of the invention claimed below.

## Claims

1. Device for capturing data for the control and tracking of products, comprising, supported on or attached to the product it is sought to control, a series of sensors (5) that capture different variables affecting the product and a process unit (1), incorporating a memory (2) of storage, a stand-alone power supply (3) and at least un emitter/receiver (4) of wireless communications, **characterized in that** the said process unit incorporates a program that analyzes, stores and transmits through a wireless network, such as Internet, the value of the variables captured at a given moment by the different sensors (5) associated to the device, placed on or around the product and where the said program manages the internal operation of the device controlling the management of the communications and the correct operation of the sensors (5), at same time as it calibrates or adjusts the operation of the sensors (5) associated to the product and/or the emitter/receiver (4), depending on given variables or conditions of operativity.

2. Method for capturing data for the control and tracking of products, **characterized in that** it comprises the following steps:
- a step of development, that foresees the periodical capture of data or variables of the said sensors (5),
- a step of storage and/or shipment through a wireless network, such as Internet, of data or variables of the said sensors (5);
- the activation and de-activation of the sensors (5) associated to the product, and/or of the emitter/receiver (4), depending on given variables or conditions of operativity of some of the mechanisms of this device;
- a step of calibration of the sensors (4) associated to the product.

3. Method for capturing data for the control and tracking of products according to the claim 2, **characterized in that** in addition it comprises the step:
- generating an alarm when the sensors (5) detect that the setpoint is exceeded.

4. Method for capturing data for the control and tracking of products according to any of the claims 2 to 3, **characterized in that** the step of calibration of the sensors (4) is of self-calibration.

5. Computer program, implemented in the memory of the process unit of the device, comprising parts of software code capable to carry out the steps of the process described in any of the claims 2-4 or the operations of the data capture device for the control and tracking of products, according to the claim 1, when it is executed in the process unit (1) of the said device.
